# EUROPEAN PATENT APPLICATION

(11) **EP 2 233 318 A1**
(43) Date of publication of application: **29.09.2010**
(21) Application number: 08850844.5
(22) Date of filing: 12.11.2008
(51) Int. Cl.: B60C 9/00, D02G 3/48

(54) **PNEUMATIC TIRE**

(30) Priority: 13.11.2007 JP 2007294651
(71) Applicant: Sumitomo Rubber Industries, Ltd., Kobe-shi, Hyogo 651-0072 (JP)
(72) Inventor: YAMAGUCHI, Eiji, Kobe-shi Hyogo 651-0072 (JP)
(74) Representative: Manitz, Finsterwald & Partner GbR
(86) International application number: PCT/JP2008/070600
(87) International publication number: WO 2009/063913

(57) **Abstract**

To improve a carcass cord in the compressive fatigue resistance, while achieving an excellent steering stability. The carcass cord 10 is a hybrid cord 13 formed by final-twisting a first strand 11 made of aramid fibers f1 and a second strand 12 made of polyester fibers f2 together. The first strand 11 is formed by mid-twisting together two filament bunches 11A of the aramid fibers f1 first-twisted together. The second strand 12 is formed by a single filament bunch 12A of the polyester fibers f2 first-twisted together.

## Description

### Pneumatic tire

### Technical Field

The present invention relates to a pneumatic tire improved in the durability and steering stability by employing a hybrid cord of aramid fibers and polyester fibers as the carcass cords.

### Background Art

In recent years, with the enhancement of performance of passenger cars, steering stability during high speed running is required. It is therefore, desired to improve the steering stability by employing high-elastic-modulus aramid fiber cords as the carcass cords forming a framework of the tire, so as to withstand forces applied to the carcass cords during cornering.

### Disclosure of Invention

### Problems to be solved by Invention

The aramid fiber cords are however, inferior in the fatigue resistance to a compressive force applied, therefore, when used as a carcass cord, damage is occurred in a bead-side region of the sidewall portion subjected to a compressive deformation during running. Thus, there is a problem such that it is inferior in the durability.

In the present invention, as the basic feature thereof, a hybrid cord is used as a carcass cord, wherein the hybrid cord is formed by final-twisting together a first strand formed by mid-twisting together two filament bunches of first-twisted aramid fibers, and a second strand made of a single filament bunch of first-twisted polyester fibers, and an object of the present invention is to provide a pneumatic tire in which the fatigue resistance of the cord is increased, while maintaining a superior steering stability, and the durability can be improved.

The followings are Prior arts using a hybrid cord as a carcass cord:
Patent document 1: Japanese published unexamined application H4-271904
Patent document 2: Japanese published unexamined application H5-262104

### Means of solving the Problems

The present invention is a pneumatic tire having a carcass extending from a tread portion to a bead core in a bead portion through a sidewall portion, and **characterized in that** the carcass is composed of at least one carcass ply of carcass cords arranged at an angle of 75 to 90 degrees with respect to the tire circumferential direction and rubberized with a topping rubber,
the carcass cord is a hybrid cord formed by final-twisting a first strand made of aramid fibers and a second strand made of polyester fibers together, and
the first strand is formed by mid-twisting together two filament bunches of first-twisted aramid fibers, whereas the second strand is a single filament bunch of first-twisted polyester fibers.

### Effects of Invention

The pneumatic tire according to the present invention employs the hybrid cord as the carcass cord, in which the first strand formed by mid-twisting together the two filament bunches of the first-twisted aramid fibers and the second strand made of the single filament bunch of the first-twisted polyester fibers are final-twisted together.
By providing such twist structure, the amount of twist of the aramid fibers are increased, and the suppleness of the first strand is increased, therefore, the fatigue resistance of the aramid fibers is improved.

By forming the second strand by the polyester fibers, during vulcanizing the tire, the second strand shrinks relatively to the first strand due to their heat shrink rates.
Therefore, there is occured such a transformation that the second strand is changed into a straight form, and the first strand is wound helically around the second strand.
As a result, the first strand can be provided with a margin for a compressive force applied, therefore, in corporation with the amount of twist of the aramid fibers increased by the twist structure, the fatigue resistance of the carcass cord is effectively increased and it becomes possible to improve the durability of the tire.

on the other hand, during cornering where the tensile load of the carcass cords becomes increased, since the aramid fibers having a higher elastic modulus bear such large tensile load, deformation of the carcass is inhibited and a superior steering stability is provided.

### Brief Description of Drawings

[Fig. 1] Fig. 1 is a cross sectional view showing an embodiment of the pneumatic tire of the present invention.
[Fig. 2] Fig. 2 is a perspective view conceptually showing a carcass cord.

### Description of Reference Signs

- 1: pneumatic tire
- 2: tread portion
- 3: sidewall portion
- 4: bead portion
- 5: bead core
- 6: carcass
- 6A: carcass ply
- 10: carcass cord
- 11: first strand
- 12: second strand
- 13: hybrid cord
- f1: aramid fibers
- f2: polyester fibers

### Best mode for caring out Invention

Hereinafter, an embodiment of the present invention will be described according to an illustrated embodiment.

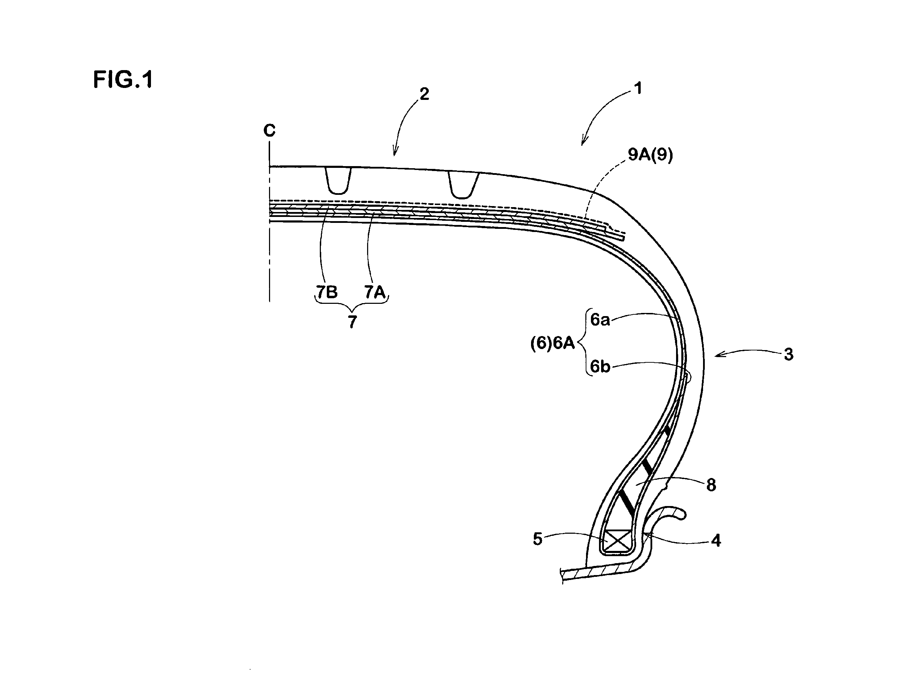

Fig. 1 is a tire meridian section showing such a case that the pneumatic tire of the present invention is a radial tire for passenger cars.

As shown in Fig. 1, the pneumatic tire 1 in this embodiment has a carcass 6 extending from a tread portion 2 to a bead core 5 in a bead portion 4 through a sidewall portion 3, and a belt layer 7 disposed in the tread portion 2 and outside the carcass 6 in the tire radial direction.

The carcass 6 is composed of at least one, in this embodiment only one, carcass ply 6A of carcass cords which are arranged at an angle of 75 to 90 degrees with respect to the tire circumferential direction and rubberized with a topping rubber. The carcass ply 6A successively has, at each end of its toroidal ply main portion 6a extending between the bead cores 5 and 5, a ply folded-back portion 6b folded back around the bead core 5 from the axially inside to outside.
Between the ply main portion 6a and ply folded-back portion 6b, there is disposed a bead apex 8 made of a hard rubber extending radially outwardly of the tire from the bead core 5 in a tapered manner so as to reinforce a region extending from the bead portion 4 into the sidewall portion 3.

The belt layer 7 is composed of at least two, in this embodiment only two, belt plies 7A and 7B of high strength belt cords such as steel cords or the like which cords are laid at an angle of, for example, 15 to 40 degrees with respect to the tire circumferential direction and rubberized with a topping rubber. Since the belt cords of each of the belt plies 7A and 7B, are crosswise mutually between the plies, the belt rigidity is increased, and the tread portion 2 is reinforced solidly across the substantially allover width thereof with its hooping effect. In this embodiment, there is shown such a case that a band 9 is disposed radially outside the belt layer 7 with a primarily objective of increasing the high-speed durability.
The band 9 is composed of at least one, in this embodiment only one, band ply 9A having a band cord wound helically at an angle of not more than 5 degrees with respect to the tire circumferential direction.
In this embodiment, there is shown such a case that the band ply 9A is a so called full-width band covering the substantially entire width of the belt layer 7. However, it can be a pair of right and left, so called, edge bands covering only outer edge portions of the belt layer 7. Thus, the band 9 is constructed by the full-width band or the edge bands or a combination thereof.

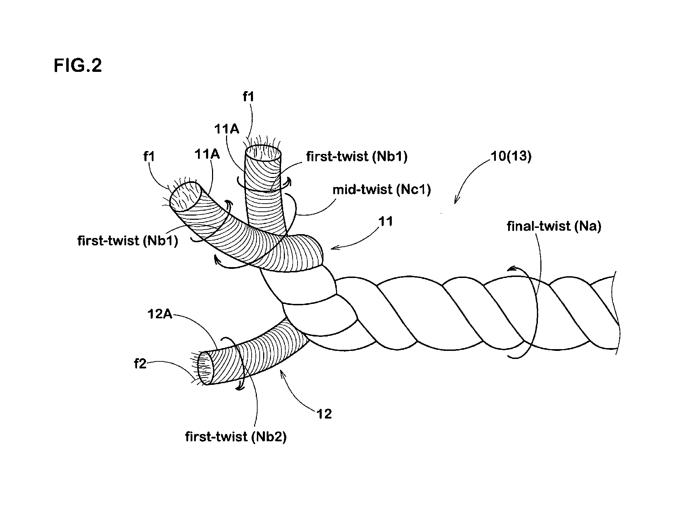

In the present invention, a hybrid cord 13 is used as the carcass cord 10, in which as conceptually shown in Fig. 2, a first strand 11 made of aramid fibers and a second strand 12 made of polyester fibers are final-twisted together.

Specifically, the first strand 11 is formed by mid-twisting two filament bunches 11A together, wherein the filament bunch 11A is that of the aramid fibers f1 first-twisted together.
On the other hand, the second strand 12 is a single filament bunch 12A of polyester fibers f2 first-twisted together.

In this embodiment, the direction of the mid-twist of the first strand 11 and the direction of the first-twist of the second strand 12 are inverse of the direction of the final-twist of the hybrid cord 13.
The direction of the first-twist of the first strand 11 is inverse of the direction of the mid-twist.

As explained above, what is obtained by twisting two first-twisted filament bunches 11A together is used as the first strand 11 of the aramid fibers.
Accordingly, the amount of twist of the aramid fibers is increased, and as the suppleness of the first strand is increased, the fatigue resistance of the aramid fibers can be increased.
Since the second strand 12 is formed from the polyester fibers f2, during vulcanizing the tire, due to their heat shrink rates, the second strand 12 shrinks relatively to the first strand 11. Therefore, there is occured such a transformation that the second strand 12 is changed into a straight form, and the first strand 11 is wound helically around the second strand 12.
As a result, the first strand 11 can be provided with a margin for a compressive force applied, therefore, in corporation with the amount of twist of the aramid fibers f1 increased by the twist structure, the fatigue resistance of the carcass cord 10 is effectively increased and it becomes possible to improve the durability of the tire.

On the other hand, during cornering where the tensile load of the carcass cords 10 becomes increased, since the aramid fibers f1 having a higher elastic modulus bear such large tensile load, the carcass cord 10 becomes hard to elongate, and deformation of the carcass 6 is inhibited. As a result, it becomes possible to bring out a superior steering stability.

If the filament bunches 11A and 12A are too thin, then the rigidity and tensile strength of the carcass cord 10 becomes insufficient, and the steering stability and durability tend to deteriorate.
If too thick, on the other hand, ride comfort is deteriorated, and the suppleness of the cord becomes insufficient in spite of the twist structure according to the present invention, therefore, it becomes difficult to sufficiently improve the fatigue resistance of the cord.
Based on this standpoint, the linear density of the filament bunch 11A is preferably in a range of 1100 dtex to 1670 dtex, and the linear density of the filament bunch 12A is preferably in a range of 1100 dtex to 1670 dtex.

In order to effectively derive the effect to improve the steering stability from the aramid fibers f1, it is required that the total linear density D1 of the first strand 11 is more than the total linear density D2 of the second strand 12. Especially, it is preferable that the ratio D1/D2 of the total linear densities is set in a range of 1.3 to 3.2.
If the ratio D1/D2 is less than 1.3, the effect to improve the steering stability becomes small with respect to the entire thickness of the cord.
If exceed 3.2, on the other hand, then the effect to improve the fatigue resistance of the cord tends to decrease.
Based on this standpoint, it is more preferable that the lower limit for the ratio D1/D2 is not less than 1.5. As to the upper limit, more preferable is not more than 3.0.

In the hybrid cord 13, it is preferable that the number Na of the final-twist is 25 to 50 turns per 10cm cord length.
If less than 25 turns, the fatigue resistance is deteriorated. If more than 20 turns, it leads to such a disadvantage that the cord strength is decreased.
It is desirable that the number Nb1 of the first-twist in the first strand 11 (namely, the number Nb1 of the first-twist of the filament bunch 11A) is 100 to 150 % of the number Nb2 of the first-twist in the second strand 12 (namely, the number Nb2 of the first-twist of the filament bunch 12A).
If less than 100 %, it is difficult to achieve such elongation characteristic that the second strand 12 stretches firstly.
If exceed 150 %, it leads to such a disadvantage that an improvement in the steering stability can not be expected.
For the number Nc1 of the mid-twist in the first strand 11, it is preferable that Nc1 ≈ Nb1 ≥ Na > Nb2.
Here, Nc1≈Nb1 means that Nc1/Nb1 is in a range of 0.9 to 1.1.

An embodiment of the present invention has been described. However, the present invention is not limited to the above-mentioned specific embodiment. Needless to say, it can be modified in various modes.

### Embodiments

Passenger radial tires of size 215/45ZR17 provided with the tire structure shown in Fig. 1 were experimentally made, using carcass cords having specifications in Table 1.
The tires were tested for ride comfort, maneuverability and stability, by running actual cars.
The results are shown in Table 1.
All of the tires had identical specifications except for the carcass cords.

### <carcass >

- ply number --- one ply
- carcass cord --- shown in Table 1
- cord angle --- 90 degrees
- cord count --- 50 ends/5cm

### <belt layer >

- ply number --- 2 plies
- belt cord --- steel cord (1X4X0.27)
- cord angle --- +18 degrees /-18 degrees
- cord count --- 40 ends/5cm

### (1) Ride comfort:

Each test tire -- wheel rim (17X7JJ), Inner pressure (200 kPa)-- was fitted to all the wheels of a car (domestic FR car of 3000 cc displacement). And it was run on a rugged road surface at a speed of 60 km/h, and the ride comfort was evaluated by the driver's feeling and indicated on a scale of one to ten. The larger value is better.

### (2) Maneuverability, Stability:

During running the above-mentioned car on a dry asphalt surface of a test course at a speed of 120 km/h, maneuverability (response to steering operations, characteristics relating to grip and the like) and stability (feelings relating to the tire rigidity when making steering operations) were evaluated by the driver's feeling and indicated on a scale of one to ten. The larger value is better.

### (3) Retention of cord strength (Fatigue endurance):

Each tire was disassembled and the carcass cords were took out. Then, according to "2.2.2 Disk Fatigue Strength(Goodrich Test method)" described in the appendix 1 of "JIS L 1017 Test methods for chemical fiber tire cords", the test was carried out for 100 hours at an elongation rate of 0 % and a compression rate of 5 %. Thereafter, the elongation-compression fatigue rate (Strength retention rate)(%) was calculated. The larger value is better.

### [Table 1]

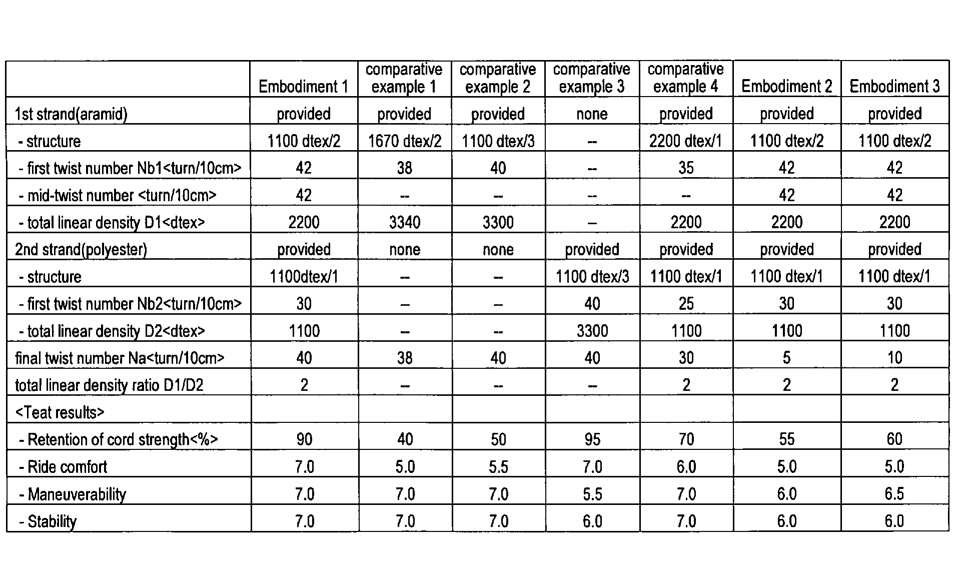

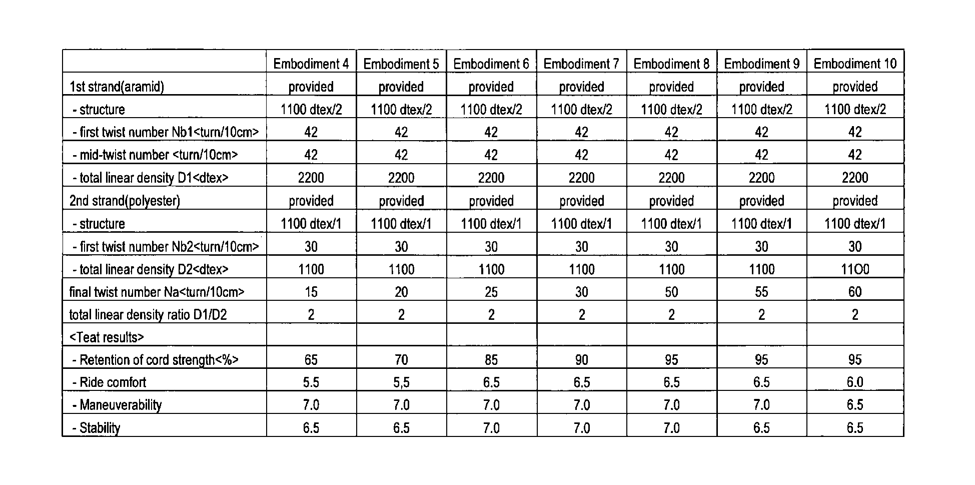

It was confirmed from the test results that Embodiment tires can be greatly improved in the fatigue resistance to compression of the carcass cords while exerting a superior ride comfort, maneuverability and stability.

## Claims

1. A pneumatic tire having a carcass extending from a tread portion to a bead core in a bead portion through a sidewall portion, **characterized in that**
the carcass is composed of at least one carcass ply of carcass cords arranged at an angle of 75 to 90 degrees with respect to a tire circumferential direction and covered with a topping rubber, the carcass cords is a hybrid cord which is formed by final-twisting together a first strand made of aramid fibers and a second strand made of polyester fibers,
the first strand is formed by mid-twisting together two bunches of first-twisted aramid fibers filaments,
the second strand is a single bunch of first-twisted polyester fibers filament.

2. The pneumatic tire as set forth in claim 1, **characterized in that** the ratio D1/D2 of the total linear density D1 of the first strand to the total linear density D2 the second strand is in a range of 1.3 to 3.2.

3. The pneumatic tire as set forth in claim 1 or 2, **characterized in that** the linear density of each said filament bunch in the first strand is in a range of 1100 dtex to 1670 dtex, and the linear density of the filament bunch in the second strand is in a range of 1100 dtex to 1670 dtex.

4. The pneumatic tire as set forth in any one of claims 1 to 3, **characterized by** the hybrid cord in which the final-twist number Na is 25 to 50 turn per 10cm cord length.

5. The pneumatic tire as set forth in any one of claims 1 to 4, **characterized by** the hybrid cord in which the first-twist number Nb1 of the first strand is 100 to 150 % of the first-twist number Nb2 of the second strand.
